# FASCICULE DE BREVET EUROPEEN

(11) **EP 2 957 463 B1**
(45) Date de publication et mention de la délivrance du brevet: **25.03.2020**
(21) Numéro de dépôt: 15171147.0
(22) Date de dépôt: 09.06.2015
(51) Int. Cl.: B60Q 1/08, B60Q 1/14, B60Q 1/18

(54) **MODULE D'ÉCLAIRAGE ET/OU DE SIGNALISATION ROTATIF**
DREHBARES BELEUCHTUNGS- UND/ODER SIGNALISIERUNGSMODUL
ROTARY LIGHTING AND/OR SIGNALLING MODULE

(30) Priorité: 16.06.2014 FR 1455508
(43) Date de publication de la demande: 23.12.2015
(73) Titulaire: VALEO VISION, 93012 Bobigny Cedex (FR)
(72) Inventeur: Sommerschuh, Stephan, 75013 Paris (FR); Reiss, Benoit, 95580 Magency (FR); Dubosc, Christophe, 93250 Villemomble (FR); De Lamberterie, Antoine, 75019 Paris (FR); Elhachir, Brahim, 75019 Paris (FR); Thabet, Ziyed, Paris 75015 (FR)

(56) Documents cités:
- EP-A1- 1 772 666
- EP-A1- 2 902 701
- EP-A2- 1 522 457
- EP-A2- 2 623 372
- EP-A2- 2 711 244
- DE-A1- 10 351 795
- DE-A1- 19 843 387
- DE-A1-102011 118 675
- FR-A1- 2 824 303
- JP-A- 2008 149 784
- US-A1- 2006 161 319
- US-A1- 2006 235 753
- US-A1- 2007 035 268
- US-A1- 2010 164 382

## Description

L'invention a trait au domaine de l'éclairage et/ou de la signalisation, notamment pour véhicules automobiles. Plus particulièrement, l'invention a trait à un module d'éclairage et/ou de signalisation pour véhicule automobile, ainsi qu'à un projecteur comprenant un tel module.

Le document FR 2 817 212 décrit un projecteur de véhicule automobile avec une fonction d'éclairage directionnel plus connu sous l'acronyme DBL (Dynamic Bending Light). Le projecteur comprend un système optique dont la direction d'éclairage est modifiée par rotation, un arbre de sortie couplé au système optique afin que celui-ci soit entraîné, un moteur, et un mécanisme de transmission de rotation couplé au moteur afin qu'il transmette la rotation du moteur à l'arbre de sortie, dans lequel le moteur, l'arbre de sortie et le mécanisme de transmission de rotation sont placés dans un corps de boîtier, et un arbre rotatif du moteur est supporté par le corps de boîtier. Un arbre de support d'un pignon intermédiaire placé entre le moteur et l'arbre de sortie est directement supporté par le corps de boîtier.

Le document EP 1 285 812 décrit un projecteur comportant un ensemble mobile muni d'un réflecteur et d'une source de lumière, et un ensemble fixe bordant au moins partiellement l'ensemble mobile qui peut tourner, relativement à l'ensemble fixe, autour d'un premier axe vertical pour un réglage en azimut, et autour d'un axe transversal horizontal pour un réglage en site. Une telle disposition a pour but de garder les jeux de fonctionnement constants entre les pièces fixes et les pièces mobiles.

Le document EP 2 423 047 décrit un projecteur d'un véhicule automobile conçu pour réunir la fonction d'éclairage de nuit avec la fonction de signalisation de jour connue sous l'acronyme anglais DRL (Daytime Running Light). L'éclairage de nuit est obtenu par un module d'éclairage fixe, tandis que l'éclairage de type DRL est réalisé au moyen d'un réseau de diodes électroluminescentes pouvant être escamoté dans une position interne au projecteur. Le document EP-A-2902701, qui appartient à l'état de la technique selon l'article 54(3) CBE, montre un projecteur comprenant plusieurs modules et permettant une animation lumineuse en réponse à la commande de déverrouillage des portes et/ou au démarrage du moteur.

L'invention a pour objectif de proposer un projecteur d'éclairage et/ou de signalisation pour véhicule automobile, comprenant un boîtier et un ensemble d'au moins deux modules d'éclairage et/ou de signalisation.

Dans ce but, chaque module comporte un système optique de déviation de rayons lumineux émis par une source de lumière pour la réalisation d'une fonction d'éclairage et/ou de signalisation, ledit système optique étant monté mobile en rotation par l'intermédiaire de moyens d'entraînement en rotation propres audit module. Selon l'invention, le module comporte en outre un dispositif de déclenchement d'une séquence d'allumage d'accueil et un dispositif de commande apte à élaborer, sous condition de réception d'une information reçue par ledit dispositif de déclenchement, des instructions de commande en rotation du système optique dudit module et des instructions de commande d'allumage de la source de lumière associée audit module.

Le module peut comporter en outre un dispositif de détection et de diagnostique d'une panne desdits moyens d'entraînement en rotation et/ou d'une panne de la source de lumière.

En outre l'invention possède les caractéristiques suivantes, considérées isolément ou en combinaison :
- ledit dispositif de détection et de diagnostique d'une panne consiste en un moyen capteur, notamment angulaire ou photométrique selon le type de détection, et un moyen de calcul programmé pour comparer la valeur mesurée par le capteur et la valeur souhaitée dans les instructions de commande.
- ledit dispositif de déclenchement d'une séquence d'allumage d'accueil consiste en un dispositif de détection de présence à proximité du véhicule. On pourra par exemple utiliser un capteur de proximité de tout individu pénétrant dans un rayon déterminé, ou un capteur d'ondes provenant d'une carte d'accès au véhicule.

Selon une autre série de caractéristiques qui peuvent être prises isolément ou en combinaison, et qui peuvent être combinées avec les caractéristiques relevées précédemment :
- lesdites commande d'allumage de la source de lumière consistent en une commande du degré d'intensité lumineuse de l'émission de la source de lumière ;
- les moyens de déviation optique consistent en une première face réfléchissante des rayons émis par une première source lumineuse, ladite première face étant porté par un support qui est apte à être entraîné en rotation par lesdits moyens d'entraînement et qui comporte en outre une deuxième face d'aspect ;
- un châssis est disposé autour du système optique et il comporte deux écrans aptes à être placés en regard de la première face réfléchissante, un premier desdits deux écrans étant majoritairement neutre ;
- chaque écran porte à sa périphérie des moyens optiques de découplage de rayons lumineux émis par une source de lumière distincte de la première source de lumière ; on comprend que le découplage des rayons pourra se faire soit par diffusion, soit par réflexion totale et/ou réfraction.
- au moins un module comporte une deuxième et une troisième source de lumière, aptes à être respectivement en regard d'un des écrans du châssis, et agencés de sorte que lorsqu'un premier desdits deux écrans est disposé sous la deuxième source de lumière, le deuxième écran est disposé sous la troisième source de lumière ; et le dispositif de commande est apte à générer en outre des instructions de commande d'allumage de la deuxième et de la troisième source de lumière.

D'autres caractéristiques peuvent être notées parmi lesquelles le fait qu'on pourra prévoir que le châssis est solidaire en rotation du support de sorte qu'un écran soit associé à demeure à l'une des faces du support, ou bien le fait que l'on pourra prévoir que le châssis est entraîné en rotation indépendamment du système optique, autour d'un deuxième axe sous l'effet d'un deuxième actionneur, de manière à ce qu'un dispositif de commande associé puisse commander à l'écran du châssis de prendre une position active sur le trajet des rayons lumineux déviés par ledit système optique.

Selon l'invention, chaque module comporte un système optique de déviation de rayons lumineux émis par une source de lumière de manière à former un faisceau lumineux primaire vers l'avant du véhicule, l'addition des faisceaux lumineux primaires formant en sortie un faisceau lumineux global dudit ensemble. Par ailleurs, le système optique de chaque module est monté mobile en rotation autour d'un axe sous l'effet d'un actionneur pour déplacer latéralement le faisceau lumineux primaire correspondant en sortie du module, le dispositif de commande étant apte à générer des instructions de commande simultanées à chacun des modules d'un même ensemble.

On pourra prévoir que le projecteur comporte trois modules disposés en série dans le boîtier.

L'invention concerne également un procédé de commande des projecteurs dans le cadre d'un véhicule automobile comportant deux projecteurs, gauche et droit, avec chaque projecteur qui comporte le même nombre de modules. On prévoira de procéder à une séquence d'allumage et de mise en rotation de chacun des modules des deux projecteurs lorsqu'une présence à proximité du véhicule est détectée, et l'on prévoira de procéder à l'analyse des mouvements et de l'éclairage qui en résultent pour établir un diagnostic de panne et/ou de dysfonctionnement de chacun des modules.

On pourra par ailleurs procéder à la mise à l'arrêt d'un module jugé défaillant, sur la base de ladite analyse, et procéder simultanément à la mise à l'arrêt du module correspondant sur l'autre projecteur.

D'autres caractéristiques et avantages de la présente invention apparaitront plus clairement à l'aide de la description et des dessins parmi lesquels :
- la figure 1 est une vue en perspective de trois quart avant d'un module d'éclairage et/ou de signalisation selon un premier mode de réalisation de l'invention, représenté ici dans une première position avec une face d'un support formant réflecteur qui est tournée vers l'avant et avec un premier écran d'un châssis qui est en regard de ce réflecteur ;
- la figure 2 est une vue, similaire à celle de la figure 1, du module représenté dans une deuxième position avec une deuxième face du support, opposée à la face formant réflecteur, qui est tournée vers l'avant, et un deuxième écran du châssis qui est en regard de cette deuxième face ;
- la figure 3 est une vue, similaire à celles des figures 1 et 2, du module représenté dans une troisième position avec la deuxième face du support qui est tournée vers l'avant, et avec cette fois le premier écran qui est en regard de cette deuxième face ;
- la figure 4 est une vue en perspective de trois quart avant d'un ensemble de trois modules représentés dans une position d'ensemble fonctionnelle d'éclairage de bienvenue, dans laquelle le module central est dans la position illustrée sur la figure 2 tandis que les modules latéraux sont dans la position illustrée sur la figure 1 ; et
- les figures 5 à 8 sont des diagrammes représentatifs de quatre séquences d'accueil différentes réalisées par la rotation et l'allumage simultanées ou différées des trois modules de la figure 4.

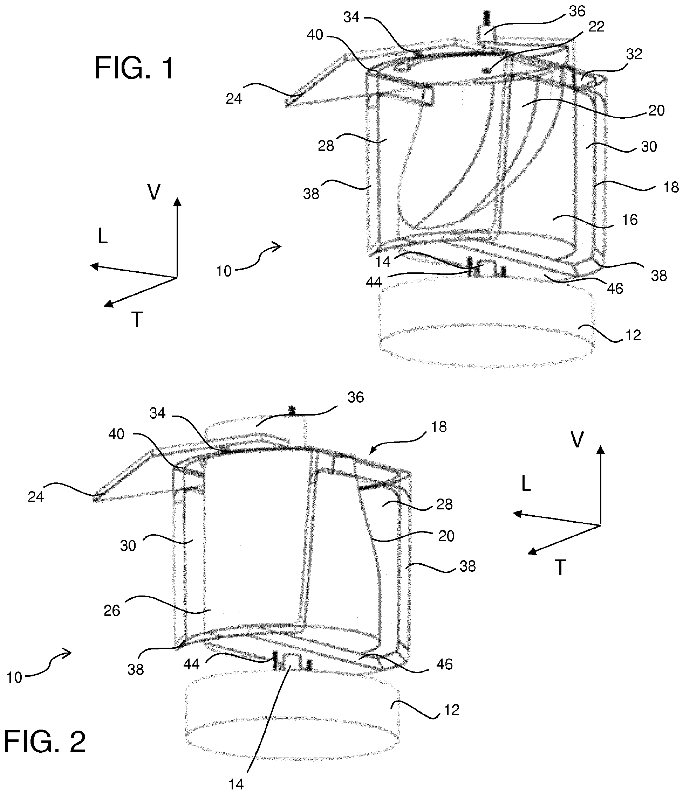

Dans la description qui va suivre, on adoptera à titre non limitatif une orientation longitudinale, verticale et transversale selon l'orientation traditionnellement utilisée dans l'automobile et indiquée par le trièdre L, V, T reporté sur la figure 1.

Un module d'éclairage et/ou de signalisation 10 est fixé dans un boitier (non représenté) d'un projecteur, et il comporte un support 16 présentant une face réfléchissante et une face d'aspect, ainsi qu'un châssis 18 qui comporte deux écrans transparents à la lumière et qui est monté autour du support 16 de sorte que chacun des écrans du châssis puisse être disposé en regard de l'une des faces du support.

Ce châssis peut être fixe par rapport au module, ou bien être monté mobile en rotation, et ce de façon solidaire en rotation du support ou bien de façon indépendante du support, de telle manière que le châssis peut tourner autour du support, pendant que celui-ci reste fixe ou tourne par ailleurs. On va décrire par la suite un mode de réalisation, dans lequel le support est monté mobile en rotation et le châssis solidaire en rotation de celui-ci mais il sera compris que les variantes évoquées en début de ce paragraphe pourront être facilement mises en œuvre sans sortir du contexte de l'invention.

Le support est monté mobile en rotation et le module comporte à cet effet un premier actionneur 12 solidaire du boitier du projecteur dans lequel est logé le module, ainsi qu'un premier axe 14 entrainé en rotation par le premier actionneur 12 et solidaire du support.

Le premier actionneur 12 comprend un moteur électrique, piloté par des moyens de commande ici non représentés et aptes à transmettre une instruction de commande audit moteur, et des moyens de transmission en rotation entre le moteur et le premier axe. Dans les modes de réalisation représentés, le premier axe 14 soutient le support 16 en sa partie inférieure, et le premier axe 14 est sensiblement vertical, mais il pourrait avoir une autre orientation.

Le support 16 du module 10 comprend une première face réfléchissante 20 jouant le rôle d'un réflecteur apte à assurer une fonction d'éclairage et/ou de signalisation réglementaire. Cette fonction est remplie par la coopération du réflecteur 20 avec une première source de lumière 22. La première source de lumière 22 est fixe par rapport à l'actionneur.

On entend par " réglementaire " le fait qu'une fonction d'éclairage et/ou de signalisation est conforme à la réglementation en vigueur. Cette fonction d'éclairage et/ou de signalisation réglementaire peut être une fonction de signalisation de jour, communément désigné par l'appellation DRL (de l'acronyme anglo-saxon " Daytime Running Light "), ou bien une fonction d'éclairage de croisement, communément désignée " code ", ou encore une fonction d'éclairage communément désignée " route ". La première face réfléchissante 20 assure ainsi la formation d'un faisceau d'éclairage et/ou de signalisation réglementaire dirigé vers l'avant du véhicule.

La première source de lumière 22 est une source à semi-conducteur, et de préférence du type diode à électroluminescence (LED), et elle est sensiblement alignée sur le premier axe 14. On entend par l'expression " sensiblement alignée " que la distance entre le centre géométrique de la diode électroluminescente 22 et l'axe de rotation du support 16 n'est pas supérieure aux dimensions de la diode électroluminescente 22. Cette dernière peut être fixée et positionnée sur une carte de circuits imprimés 24, elle-même fixée dans le boitier (non représenté) du projecteur.

Le support 16 du module 10 comporte également une deuxième face 26 opposée à la première face formant le réflecteur 20 et assurant une deuxième fonction. Cette deuxième fonction peut être soit une fonction de signalisation de jour réglementaire, soit une fonction d'éclairage de croisement et/ou de route réglementaire, soit une fonction d'aspect.

Le châssis 18 est réalisé dans un matériau transparent à la lumière et il comporte deux écrans 28 et 30 qui s'étendent sensiblement verticalement dans le module, parallèles entre eux. Chaque écran présente un bord périphérique 38 et un bord supérieur 40. Les écrans sont reliés à leur extrémité supérieure par deux parois horizontales 32 qui se raccordent perpendiculairement aux extrémités latérales du bord supérieur de l'écran en formant une base supérieure notamment de rigidification du châssis, et il est prolongé perpendiculairement à son extrémité inférieure par une base inférieure formant un élément de structure du châssis 46, sensiblement parallèle aux parois horizontales.

Il est intéressant que selon l'invention le châssis soit monté mobile en rotation de façon indépendante du support, de telle manière que le châssis peut tourner autour du support, pendant que celui-ci reste fixe ou tourne par ailleurs. A cet effet, le module comporte un deuxième actionneur solidaire du boîtier, piloté comme le premier actionneur par des moyens de commande ici non représentés, et un deuxième axe 44 entraîné en rotation par le deuxième actionneur. Le deuxième axe 44 s'étend parallèlement au premier axe de rotation du support, entre l'actionneur et un élément de structure 46 du châssis qui s'étend transversalement, perpendiculairement au deuxième axe.

Le deuxième actionneur comporte, de façon équivalente au premier actionneur 12, un moteur électrique et des moyens de transmission en rotation entre le moteur et le deuxième axe 44. Un agencement possible des deux actionneurs et des deux axes est illustré sur les figures, étant entendu que d'autres types d'agencement pourront être choisis par l'homme du métier. Dans les modes de réalisation représentés, l'élément de structure du châssis 46 prolonge sensiblement perpendiculairement l'extrémité inférieure du au moins un écran, en s'étendant en travers du premier axe de rotation du support. L'élément de structure du châssis comporte un alésage traversant, ici non représenté, apte à laisser passage au premier axe de rotation.

Le deuxième axe 44 consiste ici en deux tiges qui sont chacune reliées à l'élément de structure du châssis 46 et au deuxième actionneur, et qui sont disposées diamétralement de part et d'autre de l'arbre formant le premier axe 14.

Le deuxième actionneur est piloté en fonction d'une instruction de commande reçue en provenance de moyens de commande du module, de manière à faire pivoter autour du deuxième axe le châssis et de manière à déplacer de la sorte l'écran entre une position escamotée, dans laquelle l'écran n'est pas ou peu visible, et une position active, dans laquelle l'écran est en amont du support. On entend par « en amont » la position dans laquelle l'écran est disposé entre le support et l'avant du véhicule, vers lequel les fonctions d'éclairage et/ou de signalisation sont dirigées.

On pourra prévoir, dans une variante ici non représentée, que les écrans soient reliés uniquement à leur extrémité supérieure par des parois de liaison transversales 32 qui se raccordent perpendiculairement aux extrémités latérales du bord supérieur de l'écran en formant une base supérieure de liaison avec le support, de manière à ce que le châssis soit entraîné en rotation solidairement du support lorsque celui-ci est mis en rotation par l'actionneur.

Les écrans prennent de préférence la forme d'un guide de lumière en nappe, avec une partie centrale de la nappe présentant un profil galbé dont la courbure suit sensiblement la direction de rotation du châssis. Le châssis est ainsi agencé dans le module de sorte qu'il entoure le support, avec le premier écran 28 ou le deuxième écran 30 qui est apte selon la position du châssis à prendre la position active en amont du support. On entend par " en amont " la position dans laquelle l'écran est disposé entre le support et l'avant du véhicule, vers lequel les fonctions d'éclairage et/ou de signalisation sont dirigées.

La partie centrale de la nappe de chaque écran peut porter des moyens de découplage, notamment des prismes, pour la déviation des rayons réfléchis par le réflecteur et traversant l'écran. On peut prévoir que les deux écrans présentent des surfaces optiques différentes, l'un présentant par exemple une surface neutre, apte à ne pas gêner la diffusion des rayons lumineux émis par la première source 22 et déviés par le réflecteur, tandis que l'autre peut comporter des dispositifs optiques dont l'agencement peut former un ou plusieurs motifs représentatifs par exemple d'une marque que l'on souhaite mettre en évidence lors d'une fonction de signalisation. D'autres différences structurelles peuvent apparaître, comme par exemple le fait que l'un des écrans du châssis comporte des éléments de découplage de la lumière sur tout ou partie de sa surface pour la fonction d'aspect, tandis que l'autre écran ne présente pas un tel aspect pour rester neutre.

Dans le module selon l'invention, on peut prévoir une deuxième source de lumière 34, fixée et positionnée sur une carte de circuits imprimés, avantageusement la carte porteuse par ailleurs de la première source de lumière 22. La deuxième source de lumière est apte à éclairer l'écran du châssis qui se trouve en position active en amont du support. On prévoit que la deuxième source de lumière soit disposée à une distance déterminée de la première source de lumière pour que l'écran du châssis, lorsqu'il est dans la position active en amont du support, soit disposé au droit de la deuxième source de lumière et puisse être illuminé par celle-ci. La deuxième source de lumière 34 est fixe par rapport à la première source de lumière 22 et elle reste fixe tandis que le support et/ou le châssis tourne. Elle peut être constituée d'une ou plusieurs sources à semi-conducteurs. Dans les modes de réalisation illustrés, on a prévu que deux diodes électroluminescentes forment la deuxième source de lumière.

De la sorte, le premier écran ou le deuxième écran du châssis 18 se retrouvant dans cette position active en amont du support est disposé au droit de la deuxième source de lumière 34 de manière à pouvoir assurer ainsi une fonction de signalisation réglementaire si la deuxième source de lumière est allumée. La face d'entrée du guide, formé par au moins un des écrans, pour les rayons lumineux émis par cette deuxième source de lumière est formée par le bord supérieur de l'écran tandis que les faces de sortie sont aménagées dans le bord périphérique. On réalise ainsi une fonction d'éclairage et/ou de signalisation, distincte de celle réalisée par la réflexion des rayons lumineux de la première source de lumière. La partie périphérique de l'écran peut présenter un prisme orienté de telle ou telle façon pour procéder au renvoi de la lumière de la deuxième source 34 vers l'avant du véhicule pour remplir une fonction de signalisation et/ou vers l'arrière pour participer à la fonction d'aspect.

La deuxième source de lumière 34 peut être allumée en plus de la première source de lumière 22 afin que la partie périphérique 38 du premier écran 28, en regard du réflecteur, émette de la lumière. Cela permet d'utiliser un premier écran du châssis 18 en complément du réflecteur 20. Un usage préféré des deux sources de lumière est de garder la deuxième source constamment allumée et d'augmenter l'intensité de la deuxième source de lumière si l'on souhaite exercer une fonction de signalisation, ou bien d'allumer la première source de lumière si l'on souhaite exercer une fonction d'éclairage.

Par ailleurs, le fait d'avoir deux écrans qui présentent chacun un bord supérieur formant face d'entrée et un bord périphérique formant face de sortie de la lumière peut avantageusement être combiné à la présence, outre la deuxième source de lumière telle qu'elle a été décrite ci-dessus, d'une troisième source de lumière (non visible sur les figures) disposée de manière fixe par rapport à la première source de lumière, de sorte que lorsque le premier écran 28 du châssis 18 est disposé au droit de la deuxième source de lumière 34, le deuxième écran 30 est disposé au droit de la troisième source de lumière, et inversement, de manière à réaliser là aussi une fonction de signalisation réglementaire. La troisième source de lumière est avantageusement fixée et positionnée sur la carte de circuits imprimés 24, porteur par ailleurs des première et deuxième sources lumineuses. On comprendra toutefois que si cette solution présente des avantages d'encombrement notamment, on pourra prévoir que la troisième source de lumière soit fixée et positionnée sur une carte de circuits imprimés indépendante. Dans tous les cas, la troisième source de lumière est fixe par rapport à la première source de lumière 22. Elle peut être constituée d'une ou plusieurs sources à semi-conducteurs, du type diodes électroluminescentes (LED).

Tel qu'illustré, le module 10 peut comporter un pivot supérieur 36 colinéaire avec le premier axe 14 par l'intermédiaire du support 16 pour accroître la précision du positionnement relatif de la première source de lumière 22 par rapport au réflecteur 20, ainsi que la précision du positionnement relatif de la deuxième source de lumière 34 et de la troisième source de lumière par rapport aux écrans 28 et 30 du châssis 18.

Le module selon l'invention comporte en outre un dispositif de déclenchement d'une séquence d'accueil, un dispositif de commande apte à recevoir des informations provenant de différents capteurs d'état du véhicule et un dispositif de détection et de diagnostique d'une panne d'au moins un composant du module.

Le dispositif de déclenchement d'une séquence d'accueil détermine quand les conditions sont réunies pour réaliser une fonction de signalisation particulière. Une séquence d'accueil peut ainsi être déclenchée lorsque le dispositif détecte une commande effectuée par l'utilisateur sur sa carte d'accès. Il peut avantageusement consister en un dispositif de détection de présence. On entend par " détection de présence " le fait de déterminer le passage ou l'arrivée d'un individu à proximité du véhicule, à l'extérieur de celui-ci. Le dispositif de détection de présence peut consister en un capteur de proximité embarqué sur le véhicule, apte à envoyer une information de détection de présence dès qu'un mouvement est détecté dans un rayon donné à l'extérieur du véhicule. Il peut également consister en des moyens de détection de la présence à proximité du véhicule, dans un rayon de plusieurs mètres, d'un porteur d'une carte d'accès au véhicule. On pourra se référer au fonctionnement connu des dispositifs de fermeture et d'ouverture des portes d'un véhicule dit " véhicule sans clé ".

Le dispositif de commande est apte à élaborer des instructions de commande, sous condition de la réception au préalable d'une information reçue par ledit dispositif de détection, pour réaliser une séquence, plus ou moins longue, d'éclairage d'accueil. Les instructions de commande peuvent notamment être, d'une part, des instructions de commande en rotation du système optique du module, que l'on entende par système optique le support et/ou le châssis, et d'autre part des instructions de commande d'allumage des différentes sources de lumière associées audit module.

Le dispositif de détection et de diagnostic vise à cibler les pannes et/ou les disfonctionnements des moyens d'entraînement en rotation, ainsi que les pannes et/ou les disfonctionnements des différentes sources de lumière. Dans le premier cas, le dispositif de détection peut consister en un capteur angulaire apte à mesurer le déplacement angulaire du premier axe et un moyen de calcul programmé pour comparer la valeur mesurée par le capteur et la valeur souhaitée dans les instructions de commande. Dans le deuxième cas, le dispositif de détection peut consister en un capteur de lumière à base de photorésistances disposées en sortie du module et un moyen de calcul programmé pour comparer la valeur mesurée par le capteur et la valeur souhaitée dans les instructions de commande.

Le dispositif de déclenchement de séquence d'accueil communique avec le dispositif de commande, notamment pour piloter le moment de création et d'envoi des instructions de commande aux modules, et le dispositif de détection et de diagnostic communique avec le dispositif de commande pour donner une information de panne et/ou de dysfonctionnement d'un ou de plusieurs des modules, de manière à ce que le dispositif de commande puisse bloquer le module défaillant, et qu'il puisse donnes des instructions de commande aux autres modules qui correspondent à un mode dégradé compilé par ailleurs dans ledit dispositif de commande.

Un projecteur de véhicule automobile selon l'invention comporte un ensemble d'au moins deux modules tels qu'ils viennent d'être décrits. Chaque module d'un même projecteur est commandé pour former un faisceau lumineux primaire vers l'avant du véhicule, l'addition des faisceaux lumineux primaires formant en sortie du projecteur un faisceau lumineux global. Le système optique de chaque module est monté mobile en rotation autour d'un axe sous l'effet d'un actionneur pour déplacer latéralement le faisceau lumineux primaire correspondant en sortie du module, et l'on prévoit un dispositif de commande unique pour l'élaboration et l'envoi d'instructions de commande simultanées à chacun des modules d'un même ensemble. La possibilité offert par l'invention de pouvoir donner instructions de commande aux actionneurs de façon indépendante les uns des autres permet d'assurer une plus grande souplesse dans les séquences d'éclairage et/ou de signalisation d'accueil, connues sous le nom de " fonction d'accueil ".

Il est notable que dans un même projecteur, les modules peuvent être commandés avec des instructions différentes, de sorte qu'un module peut être commandé pour réaliser une fonction de signalisation seule tandis que le module voisin peut être commandé pour réaliser une fonction de signalisation couplée à un mouvement de rotation. Et on pourra prévoir que les modules du projecteur gauche soient pilotés de façon symétrique aux modules du projecteur droit.

On va maintenant décrire l'utilisation qui peut être faite d'un ensemble de modules selon l'invention, en s'appuyant sur les figures 1 à 3. Dans chaque module, le châssis comporte deux écrans 28 et 30 de même que le support a deux faces 20 et 26, et chacun des écrans du châssis est disposée sous la deuxième source de lumière 34 ou la troisième source de lumière.

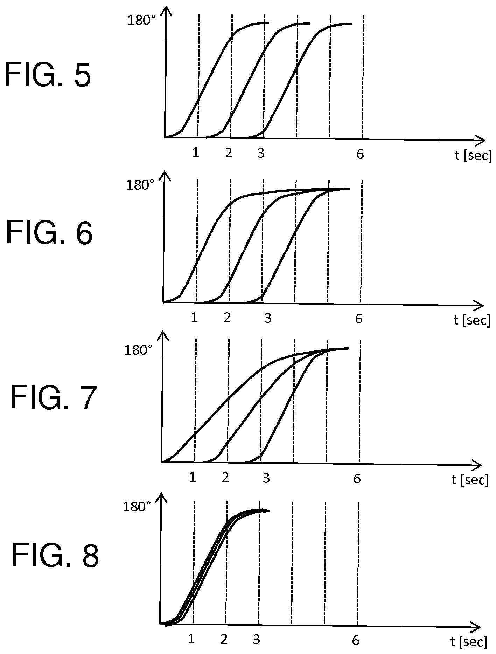

Chaque support de module est piloté en rotation, par l'intermédiaire du dispositif de commande, pour créer une séquence d'accueil spécifique au véhicule, et qui peut varier selon que ce soit le conducteur porteur d'une carte d'accès, ou un individu lambda, qui soit détecté en approche du véhicule. Dans un mode de réalisation d'une séquence d'accueil où trois modules d'un ensemble partent d'une même position et finissent dans une même position, on peut prévoir plusieurs séquences différentes selon la vitesse de rotation que l'on impose aux actionneurs associés à chaque module et selon le retard avec lequel on démarre la rotation des modules les uns par rapport aux autres. Sur la figure 5, on a représenté une séquence d'accueil, dans laquelle les modules sont mis en rotation à intervalle régulier, préférentiellement d'une extrémité à l'autre de l'ensemble de modules, et avec une même vitesse de rotation de sorte qu'ils arrivent en position finale, ici après une rotation de 180°, à intervalle régulier. Sur la figure 6, on a représenté une séquence d'accueil dans laquelle, là encore, les modules sont mis en rotation à intervalle régulier, mais avec des vitesses de rotation variables sur la fin du parcours pour que chaque module arrive en position finale en même temps. Ceci est également le cas dans la séquence représentée sur la figure 7, avec toutefois ici des vitesses de rotation variables dès le début du parcours. Enfin, sur la figure 8, on a représenté une séquence d'accueil dans laquelle on réalise un mouvement simultané des trois modules.

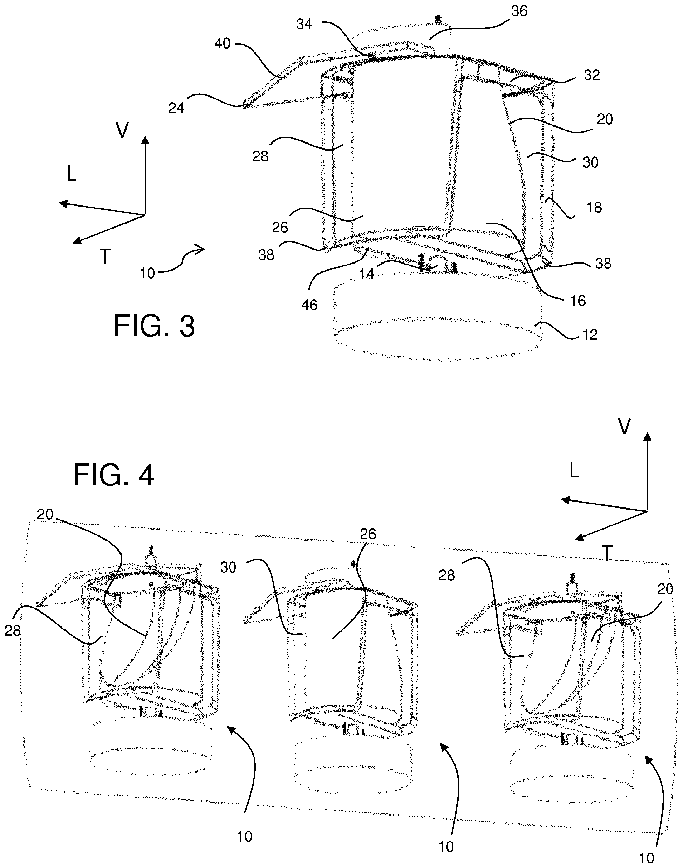

Par ailleurs, on a représenté sur la figure 4 un agencement possible de l'ensemble de modules d'un projecteur au cours d'une séquence d'éclairage d'accueil, dans laquelle, contrairement aux séquences décrites précédemment, on ne cherche pas à ce que les modules gardent une cohérence de position entre eux. On peut constater qu'aucun des modules n'est dans la même configuration, chacune de ces configurations étant reprise plus en détails sur les figures 1 à 3.

Sur la figure 1, le module 10 est orienté de manière à ce que le réflecteur formé par la face réfléchissante 20 du support soit visible et orienté vers l'avant du véhicule, et de manière à ce qu'un premier écran 28 du châssis soit disposé en amont du réflecteur, c'est à dire entre le support et l'avant du véhicule. Dans cette position, le premier écran 28 est situé sous la deuxième source de lumière 34 et le deuxième écran 30 du châssis est situé sous la troisième source de lumière.

Si la première source de lumière 22 est allumée, elle émet des rayons lumineux en direction du réflecteur, qui renvoie ces rayons lumineux vers l'avant du véhicule, lesdits rayons lumineux traversant la face transparente neutre du premier écran avant de sortir du module. Si la deuxième source de lumière 34 est allumée, elle émet des rayons lumineux dans le premier écran du châssis, les rayons pénétrant dans le premier écran par le bord supérieur situé au droit de la deuxième source de lumière. Les écrans sont réfléchis en interne jusqu'à la face de sortie formée en périphérie du premier écran. Si la troisième source de lumière est allumée, elle émet des rayons lumineux dans le deuxième écran du châssis, les rayons pénétrant dans le deuxième écran par le bord supérieur situé au droit de la troisième source de lumière. Les écrans sont réfléchis en interne jusqu'à la face de sortie formée en périphérie du deuxième écran.

On comprend que pour une position donnée du support et du châssis, on peut jouer sur l'allumage et l'extinction des sources de lumière pour créer plusieurs rendus optiques différents. La deuxième source de lumière 34 peut être allumée en plus de la première source de lumière 22 afin que la partie périphérique 38 du premier écran 28 émette de la lumière émise par la deuxième source tandis que le centre de l'écran laisse passer la lumière émise par la première source. Une double illumination du premier écran peut ainsi être réalisée. On pourra également commander l'allumage de la troisième source de lumière, en plus de la première source de lumière 22, indépendamment du fait que la deuxième source de lumière 34 ait été allumée ou non. Cela permet d'utiliser, via l'émission de lumière de la partie périphérique du deuxième écran 30 en regard de la deuxième face 26 du support, d'utiliser ce deuxième écran du châssis pour réaliser une fonction de signalisation réglementaire.

La fonction d'éclairage peut également être directionnelle, c'est-à-dire du type DBL (Dynamic Bending Light), grâce à l'actionneur 12 du module 10, qui peut commander une rotation du réflecteur de quelques degrés autour du premier axe. Cette rotation s'accompagne d'un déplacement combiné de l'écran qui reste en regard du réflecteur lorsque le châssis est solidaire en rotation du réflecteur, et lorsque le châssis est monté mobile en rotation de façon indépendante de la rotation du réflecteur, on commande la rotation de l'écran pour que là encore l'écran reste dans l'axe d'émission des rayons réfléchis par le réflecteur, pour qu'aucune dispersion des rayons ne résulte de cet éclairage directionnel.

Sur la figure 2, le support 16 du module 10 a subi par rapport à la configuration de la figure 1 une rotation de 180°, de manière à présenter la deuxième face 26 assurant ainsi la fonction d'aspect et/ou d'éclairage et/ou de signalisation décrite également ci-avant. Le module 10 passe de la configuration illustrée sur la figure 1 à la configuration illustrée sur les figures 2 et 3, et réciproquement, par un mouvement de rotation du support 16, accompagné ou non du châssis 18. Le mouvement du support est généré par l'actionneur 12 par l'intermédiaire du premier axe 14 et du pivot 36.

La face d'aspect 26 est alors visible à travers l'un des écrans du châssis. Dans le cas représenté sur la figure 2, le châssis a subi par rapport à la configuration de la figure 1 une rotation semblable à celle du support 16, c'est-à-dire une rotation de 180°, de sorte que le deuxième écran 30 reste en regard de la face d'aspect 26. Dans le cas représenté sur la figure 3, le châssis 18 est resté dans la position qu'il avait avant la rotation du support 16, de sorte que c'est le premier écran 28 qui est en regard de la face d'aspect.

On comprend que la réalisation des différents cas représentés sur les figures 2 et 3 est possible dès lors que le châssis est monté mobile en rotation de façon indépendante du support. On peut dans ce cas choisir quel écran du châssis est en amont du support, selon la fonction d'éclairage et/ou de signalisation qu'on souhaite effectuer avec le réflecteur ou la face d'aspect du support. Et il sera notamment intéressant de choisir entre un premier écran 28, majoritairement neutre, et un deuxième écran 30 qui présente des dispositifs optiques sur la partie centrale de la nappe, dont l'agencement forme des motifs représentant par exemple la marque du constructeur du véhicule ou des projecteurs. Lorsque c'est le deuxième écran qui en amont du support, l'allumage de la deuxième source de lumière réalise l'éclairage du motif central en plus de l'éclairage de la partie périphérique.

On comprend que dans le cas où le châssis est solidaire en rotation du support, le deuxième écran 30 du châssis est constamment en regard de la face d'aspect du support, tandis que c'est le premier écran 28, majoritairement neutre, qui est en regard du réflecteur.

Tel que cela a pu être décrit précédemment, les moyens de détection de panne et/ou de dysfonctionnement sont aptes à donner une information relative à l'absence de rotation du système optique, que ce soit le réflecteur ou le châssis, pour passer d'une position d'une séquence telle qu'elle vient d'être décrite à une position suivante de cette séquence. Ils peuvent également détecter l'absence d'allumage d'une des sources de lumière, ou un défaut d'intensité lumineuse de ces sources. L'information d'une panne ou d'un dysfonctionnement est transmise au dispositif de commande associé aux modules. On prévoit qu'un seul dispositif de commande reçoivent les informations et génèrent les instructions relatives à chaque module, et dans ce cas, le dispositif de commande émet une instruction d'arrêt du module porteur de la panne ou du dysfonctionnement, tout en envoyant un message informatif au conducteur. Pour des questions aussi bien d'esthétique générale du véhicule que de qualité homogène de l'éclairage, le dispositif de commande peut simultanément émettre une instruction d'arrêt du module symétrique au module en panne, même si le module symétrique fonctionne correctement. On comprend par module symétrique d'un module défectueux, le module disposé dans l'autre projecteur et symétrique par rapport au plan médian du véhicule. Si le module le plus à l'extérieur du projecteur gauche est défectueux, le dispositif de commande envoie simultanément une instruction de commande d'arrêt de ce module défectueux et une instruction de commande d'arrêt du module le plus à l'extérieur du projecteur droit.

La description qui précède explique clairement comment l'invention permet d'atteindre les objectifs qu'elle s'est fixés et notamment de proposer un projecteur comprenant ensemble de modules d'éclairage et/ou de signalisation qui permette de proposer une fonction d'éclairage et/ou de signalisation d'accueil, lorsque le conducteur, ou tout autre personne, s'approche du véhicule. Il est particulièrement intéressant selon l'invention d'associer cette fonction d'accueil à des moyens de diagnostic de panne et/ou de dysfonctionnement des modules, dans un contexte de modules lumineux rotatifs pour lesquels il importe que les moyens d'entraînement en rotation des dispositifs optiques fonctionnent correctement pour un éclairage d'ensemble respectant les conditions photométriques réglementaires.

## Revendications

1. Projecteur d'éclairage et/ou de signalisation pour véhicule automobile comportant un boîtier et un ensemble d'au moins deux modules d'éclairage et/ou de signalisation, dans lequel chaque module (10) comporte un système optique (16, 18, 20) de déviation de rayons lumineux émis par une source de lumière (22) de manière à former un faisceau lumineux primaire vers l'avant du véhicule, l'addition des faisceaux lumineux primaires formant en sortie un faisceau lumineux global, ledit système optique de chaque module étant monté mobile en rotation par l'intermédiaire de moyens d'entraînement en rotation (12, 14) propres audit module, le projecteur comportant en outre un dispositif de commande apte à élaborer, sous condition de réception d'une information reçue par un dispositif de déclenchement d'une séquence d'éclairage d'accueil, des instructions de commande en rotation du système optique de chaque module et des instructions de commande d'allumage de la source de lumière associée à chaque module pour réaliser la séquence d'éclairage d'accueil.

2. Projecteur selon la revendication 1, **caractérisé en ce qu'**il comporte en outre un dispositif de détection et de diagnostique d'une panne desdits moyens d'entraînement en rotation (12, 14) et/ou d'une panne de la source de lumière (22).

3. Projecteur selon la revendication 2, **caractérisé en ce que** ledit dispositif de détection et de diagnostique d'une panne consiste en un moyen capteur, notamment angulaire ou photométrique selon le type de détection, et un moyen de calcul programmé pour comparer la valeur mesurée par le capteur et la valeur souhaitée dans les instructions de commande.

4. Projecteur selon l'une des revendications précédentes, **caractérisé en ce que** ledit dispositif de déclenchement d'une séquence d'accueil consiste en un dispositif de détection de présence à proximité du véhicule.

5. Projecteur selon l'une des revendications précédentes, **caractérisé en ce que** lesdites commande d'allumage de la source de lumière (22) consistent en une commande du degré d'intensité lumineuse de l'émission de la source de lumière.

6. Projecteur selon l'une des revendications précédentes, **caractérisé en ce que** les moyens de déviation optique consistent en une première face réfléchissante (20) des rayons émis par une première source lumineuse (22), ladite première face étant porté par un support (16) qui est apte à être entraîné en rotation par lesdits moyens d'entraînement (12, 14) et qui comporte en outre une deuxième face d'aspect (26).

7. Projecteur selon l'une des revendications précédentes, **caractérisé en ce qu'**il comporte un châssis (18) disposé autour du support (16) et comportant deux écrans (28, 30) aptes à être placés en regard des moyens de déviation optique, un premier desdits deux écrans étant majoritairement neutre.

8. Projecteur selon la revendication précédente, **caractérisé en ce que** chaque écran (28, 30) porte à sa périphérie (38) des moyens optiques de diffusion de rayons lumineux émis par une deuxième source de lumière (34) distincte de ladite source de lumière (22).

9. Projecteur selon la revendication précédente, **caractérisé en ce qu'**il comporte une deuxième source de lumière (34) et une troisième source de lumière, aptes à être respectivement en regard d'un des écrans (28, 30) du châssis (18), et agencés de sorte que lorsqu'un premier (28) desdits deux écrans est disposé sous la deuxième source de lumière, le deuxième écran (30) est disposé sous la troisième source de lumière.

10. Projecteur selon la revendication précédente, **caractérisé en ce que** le dispositif de commande est apte à générer en outre des instructions de commande d'allumage de la deuxième source de lumière (34) et de la troisième source de lumière.

11. Projecteur selon l'une des revendications 7 à 10, **caractérisé en ce que** le châssis (18) est solidaire en rotation du support (16) de sorte qu'un écran (28, 30) soit associé à demeure à l'une des faces (20, 26) du support.

12. Projecteur selon l'une des revendications 7 à 11, **caractérisé en ce que** le châssis (18) est entraîné en rotation indépendamment du support (16), autour d'un deuxième axe (44) sous l'effet d'un deuxième actionneur, de manière à ce qu'un dispositif de commande associé puisse commander à l'écran (28, 30) du châssis de prendre une position active sur le trajet des rayons lumineux déviés par lesdits moyens de déviation optique.

13. Projecteur selon l'une des revendications 1 à 12, dans lequel le système optique de chaque module est monté mobile en rotation autour d'un axe (14) sous l'effet d'un actionneur (12) pour déplacer latéralement le faisceau lumineux primaire correspondant en sortie du module, le dispositif de commande étant apte à générer des instructions de commande simultanées à chacun des modules d'un même ensemble.

14. Procédé de commande de projecteurs dans le cadre d'un véhicule automobile comportant deux projecteurs, gauche et droit, selon l'une des revendications 1 à 13, chaque projecteur comportant le même nombre de modules, dans lequel on procède à une séquence d'allumage et de mise en rotation de chacun des modules des deux projecteurs lorsqu'une présence à proximité du véhicule est détectée, et dans lequel on procède à l'analyse des mouvements et de l'éclairage qui en résultent pour établir un diagnostic de panne et/ou de dysfonctionnement de chacun des modules.

15. Procédé de commande selon la revendication 14, **caractérisé en ce que** l'on procède à la mise à l'arrêt d'un module jugé défaillant, sur la base de ladite analyse, et **en ce que** l'on procède simultanément à la mise à l'arrêt du module correspondant sur l'autre projecteur.

16. Procédé de commande selon la revendication 15, **caractérisé en ce que** l'on procède à la mise à l'arrêt d'un module jugé défaillant, sur la base de ladite analyse, et **en ce que** l'on procède simultanément à l'élaboration d'instructions de commande des autres modules associés pour commander leur fonctionnement en un mode dégradé.

## Patentansprüche

1. Beleuchtungs- und/oder Signalisierungsscheinwerfer für ein Kraftfahrzeug, beinhaltend ein Gehäuse und eine Anordnung aus mindestens zwei Beleuchtungs- und/oder Signalisierungsmodulen, wobei jedes Modul (10) ein optisches System (16, 18, 20) zur Ablenkung von Lichtstrahlen, die von einer Lichtquelle (22) emittiert werden, umfasst, um einen primären Lichtstrahl zur Vorderseite des Fahrzeugs hin zu bilden, wobei durch das Zusammenfügen der primären Lichtstrahlen am Ausgang ein globaler Lichtstrahl gebildet wird,
wobei das optische System jedes Moduls durch Drehantriebsmittel (12, 14), die zu dem Modul gehören, drehbar befestigt ist,
wobei der Scheinwerfer ferner eine Steuervorrichtung umfasst, die unter der Voraussetzung des Empfangs einer von einer Vorrichtung zur Auslösung einer Begrüßungsbeleuchtungssequenz empfangenen Information fähig ist, Steueranweisungen zur Drehung des optischen Systems jedes Moduls und Steueranweisungen zum Einschalten der mit jedem Modul assoziierten Lichtquelle zu erteilen, um die Begrüßungsbeleuchtungssequenz auszuführen.

2. Scheinwerfer nach Anspruch 1, **dadurch gekennzeichnet, dass** er ferner eine Vorrichtung zur Erfassung und Diagnose einer Störung der Drehantriebsmittel (12, 14) und/oder einer Störung der Lichtquelle (22) umfasst.

3. Scheinwerfer nach Anspruch 2, **dadurch gekennzeichnet, dass** die Vorrichtung zur Erfassung und Diagnose einer Störung aus einem Sensormittel, insbesondere je nach Erfassungstyp einem Winkel- oder fotometrischen Sensormittel, und einem Berechnungsmittel, das programmiert ist, um den durch den Sensor gemessenen Wert mit dem in den Steueranweisungen vorgegebenen Wert zu vergleichen, besteht.

4. Scheinwerfer nach einem der vorhergehenden Ansprüche, **dadurch gekennzeichnet, dass** die Vorrichtung zur Auslösung einer Begrüßungssequenz aus einer Vorrichtung zur Erfassung einer Anwesenheit in der Nähe des Fahrzeugs besteht.

5. Scheinwerfer nach einem der vorhergehenden Ansprüche, **dadurch gekennzeichnet, dass** die Steuerungen zum Einschalten der Lichtquelle (22) aus einer Steuerung des Lichtintensitätsgrads der Emission der Lichtquelle bestehen.

6. Scheinwerfer nach einem der vorhergehenden Ansprüche, **dadurch gekennzeichnet, dass** die Mittel zur optischen Ablenkung aus einer ersten Seite (20) zur Reflexion der durch eine erste Lichtquelle (22) emittierten Strahlen bestehen, wobei die erste Seite von einem Träger (16) getragen wird, der fähig ist, durch die Drehantriebsmittel (12, 14) drehangetrieben zu werden, und der ferner eine zweite Sichtseite (26) umfasst.

7. Scheinwerfer nach einem der vorhergehenden Ansprüche, **dadurch gekennzeichnet, dass** er ein Gestell (18) umfasst, das um den Träger (16) herum angeordnet ist und zwei Schirme (28, 30) umfasst, die fähig sind, gegenüber den Mitteln zur optischen Ablenkung platziert zu werden, wobei ein erster der zwei Schirme überwiegend neutral ist.

8. Scheinwerfer nach dem vorhergehenden Anspruch, **dadurch gekennzeichnet, dass** jeder Schirm (28, 30) an seinem Umfang (38) optische Mittel zur Streuung von Lichtstrahlen, die durch eine zweite Lichtquelle (34), die sich von der Lichtquelle (22) unterscheidet, emittiert werden, trägt.

9. Scheinwerfer nach dem vorhergehenden Anspruch, **dadurch gekennzeichnet, dass** er eine zweite Lichtquelle (34) und eine dritte Lichtquelle umfasst, die jeweils fähig sind, sich gegenüber einem der Schirme (28, 30) des Gestells (18) zu befinden, und die so eingerichtet sind, dass, wenn ein erster (28) der zwei Schirme unter der zweiten Lichtquelle angeordnet ist, der zweite Schirm (30) unter der dritten Lichtquelle angeordnet ist.

10. Scheinwerfer nach dem vorhergehenden Anspruch, **dadurch gekennzeichnet, dass** die Steuervorrichtung fähig ist, ferner Steueranweisungen zum Einschalten der zweiten Lichtquelle (34) und der dritten Lichtquelle zu erzeugen.

11. Scheinwerfer nach einem der Ansprüche 7 bis 10, **dadurch gekennzeichnet, dass** das Gestell (18) drehfest an dem Träger (16) befestigt ist, sodass ein Schirm (28, 30) dauerhaft mit einer der Seiten (20, 26) des Trägers assoziiert ist.

12. Scheinwerfer nach einem der Ansprüche 7 bis 11, **dadurch gekennzeichnet, dass** das Gestell (18) unter Einwirkung eines zweiten Stellglieds unabhängig von dem Träger (16) um eine zweite Achse (44) drehangetrieben wird, sodass eine assoziierte Steuervorrichtung den Schirm (28, 30) des Gestells derart steuern kann, dass dieser auf der Bahn der durch die optischen Ablenkungsmittel abgelenkten Lichtstrahlen eine aktive Position einnimmt.

13. Scheinwerfer nach einem der Ansprüche 1 bis 12, wobei das optische System jedes Moduls unter Einwirkung eines Stellglieds (12) um eine Achse (14) drehbar befestigt ist, um den entsprechenden primären Lichtstrahl am Ausgang des Moduls seitlich zu verlagern, wobei die Steuervorrichtung fähig ist, für jedes der Module einer gleichen Anordnung simultane Steueranweisungen zu erzeugen.

14. Verfahren zur Steuerung von Scheinwerfern im Rahmen eines Kraftfahrzeugs, umfassend zwei Scheinwerfer, einen linken und einen rechten, nach einem der Ansprüche 1 bis 13, wobei jeder Scheinwerfer die gleiche Anzahl an Modulen umfasst, wobei an jedem der Module der zwei Scheinwerfer eine Einschalt- und eine Drehsequenz durchgeführt wird, wenn eine Anwesenheit in der Nähe des Fahrzeugs erfasst wird, und wobei eine Analyse der Bewegungen und der daraus resultierenden Beleuchtung durchgeführt wird, um für jedes der Module eine Diagnose einer Störung und/oder eines Defekts zu erstellen.

15. Steuerverfahren nach Anspruch 14, **dadurch gekennzeichnet, dass** auf der Basis der Analyse die Abschaltung eines als defekt eingestuften Moduls durchgeführt wird und dass simultan die Abschaltung des entsprechenden Moduls in dem anderen Scheinwerfer durchgeführt wird.

16. Steuerverfahren nach Anspruch 15, **dadurch gekennzeichnet, dass** auf der Basis der Analyse die Abschaltung eines als defekt eingestuften Moduls durchgeführt wird und dass simultan die Erteilung von Anweisungen zur Steuerung der anderen assoziierten Module durchgeführt wird, um ihren Betrieb in einem verminderten Modus zu steuern.

## Claims

1. Lighting and/or signalling headlight for a motor vehicle comprising a housing and an assembly of at least two lighting and/or signalling modules, in which each module (10) comprises an optical system (16, 18, 20) for deflecting light rays emitted by a light source (22) so as to form a primary light beam towards the front of the vehicle, the addition of the primary light beams forming an overall light beam at the output, said optical system of each module being mounted so as to be able to move in rotation by means of rotational drive means (12, 14) specific to the said module,
the headlamp further comprising a control device capable of producing, under the condition of receiving information received by a device for triggering a welcome lighting sequence, instructions for controlling the rotation of the optical system of each module and instructions for controlling the switching on of the light source associated with each module in order to carry out the welcome lighting sequence.

2. Headlamp according to claim 1, **characterized in that** it further comprises a device for detecting and diagnosing a failure of said rotary drive means (12, 14) and/or a failure of the light source (22).

3. Headlamp according to claim 2, **characterized in that** said device for detecting and diagnosing a fault consists of a sensor means, in particular angular or photometric depending on the type of detection, and a programmed calculation means for comparing the value measured by the sensor and the value desired in the control instructions.

4. Headlamp according to one of the preceding claims, **characterized in that** said device for triggering a welcome sequence consists of a device for detecting presence in the vicinity of the vehicle.

5. Headlamp according to one of the preceding claims, **characterized in that** said light source (22) switching on control consists of controlling the degree of light intensity of the light source emission.

6. Headlamp according to one of the preceding claims, **characterized in that** the optical deflection means consist of a first face (20) reflecting the rays emitted by a first light source (22), said first face being carried by a support (16) which is capable of being driven in rotation by the said drive means (12, 14) and which also has a second face (26).

7. Headlamp according to one of the preceding claims, **characterized in that** it comprises a frame (18) disposed around the support (16) and including two screens (28, 30) suitable for being placed facing the optical deflection means, a first of said two screens being predominantly neutral.

8. Headlamp according to the preceding claim, **characterized in that** each screen (28, 30) carries on its periphery (38) optical means for diffusing light rays emitted by a second light source (34) distinct from said light source (22).

9. Headlamp according to the preceding claim, **characterized in that** it comprises a second light source (34) and a third light source, capable of respectively facing one of the screens (28, 30) of the frame (18), and arranged so that when a first (28) of the said two screens is disposed under the second light source, the second screen (30) is disposed under the third light source.

10. Headlamp according to the preceding claim, **characterized in that** the control device is adapted to additionally generate switching on control commands for the second light source (34) and the third light source.

11. Headlamp according to one of claims 7 to 10, **characterized in that** the frame (18) is rotationally fixed to the support (16) so that a screen (28, 30) is permanently associated with one of the faces (20, 26) of the support.

12. Headlamp according to one of claims 7 to 11, **characterized in that** the frame (18) is driven in rotation independently of the support (16), about a second axis (44) under the effect of a second actuator, so that an associated control device can command the screen (28, 30) of the frame to take an active position in the path of the light rays deflected by said optical deflection means.

13. Headlamp according to one of claims 1 to 12, in which the optical system of each module is mounted so as to be rotatable about an axis (14) under the effect of an actuator (12) in order to laterally displace the corresponding primary light beam at the output of the module, the control device being capable of generating control instructions simultaneous to each of the modules of the same assembly.

14. Method for controlling headlamps, in a motor vehicle having two headlamps, left and right, according to one of claims 1 to 13, each headlamp having the same number of modules, in which a sequence of switching on and turning on each of the modules of the two headlamps is carried out when a presence in the vicinity of the vehicle is detected, and in which the resulting movements and lighting are analyzed in order to establish a fault and/or malfunction diagnosis of each of the modules.

15. Method according to claim 14, **characterized in that** a module judged to be defective is switched off, on the basis of said analysis, and **in that** the corresponding module on the other projector is simultaneously switched off.

16. Method according to claim 15, **characterized in that** a module judged to be defective is shut down on the basis of said analysis, and **in that** control instructions are simultaneously produced for the other associated modules in order to control their operation in a degraded mode.
